Europäisches Patentamt

European Patent Office

Office européen des brevets

(19)

(11) Veröffentlichungsnummer: **0 183 075**
**A1**

(12) **EUROPÄISCHE PATENTANMELDUNG**

(21) Anmeldenummer: **85113815.6**

(22) Anmeldetag: **30.10.85**

(51) Int. Cl.⁴: **G 05 D 7/06**
**F 16 K 31/04, G 05 B 11/28**

(30) Priorität: **22.11.84 CH 5596/84**

(43) Veröffentlichungstag der Anmeldung:
**04.06.86 Patentblatt 86/23**

(84) Benannte Vertragsstaaten:
**AT BE DE FR GB IT LU NL SE**

(71) Anmelder: **Gyco Control AG**
**Bachstrasse 34**
**CH-5034 Suhr(CH)**

(72) Erfinder: **Covelli, Bruno**
**Margretenweg 3**
**CH-5034 Suhr(CH)**

(72) Erfinder: **Gysi, Reinhard**
**Blumenweg 5**
**CH-5034 Suhr(CH)**

(74) Vertreter: **Blum, Rudolf Emil Ernst et al,**
**c/o E. Blum & Co Patentanwälte Vorderberg 11**
**CH-8044 Zürich(CH)**

(54) Regeleinrichtung.

(57) Die Regeleinrichtung, welche insbesondere für die Durchfluss- bzw. Druckregelung mittels eines Kugelhahnes als Stelleinrichtung vorgesehen ist, besitzt einen Ist-Werteingang 10 für den Anschluss eines Sensors (S), einen einstellbaren Sollwertgeber (13), eine Anordnung zur Bestimmung der Sollwertabweichung (15), sowie einen Signalübertrager (16-19) zur Erzeugung eines stetigen Regelausgangssignals (V$_{AUS}$). Mit diesem Regelausgangssignal (V$_{AUS}$) wird in einem Impulsbreitenmodulator (20) ein Frequenzsignal erzeugt, wobei das Tastverhältnis der Impulse gemäss dem Regelausgangssignal (V$_{AUS}$) gesteuert ist. Dieses Frequenzsignal wird zum Treiben eines Niederspannungs-Gleichstrommotors (M) verwendet, der über ein hochuntersetztes Getriebe die Ventilkugel eines Kugelhahnes verstellt. Damit kann trotz des relativ groben Ventiltyps und relativ grosser Anfahrdrehmomente eine feine Regelung bei kleiner Verlustleistung erzielt werden.

./...

EP 0 183 075 A1

Fig.1

S

10

11

12  $V_{ist}$

13  026

14  $V_{soll}$

15  $V_\Delta$

24  45-75%

P  16

I  17

D  18

19

2  220V 50Hz

22

Abweichung  23
⊗ +10%
⊗ +5%
⊗ 0%
⊗ -5%
⊗ -10%

21  20  $f_o$

$V_{AUS}$

$V_T$

M

1

-1-

Regeleinrichtung
-----------------

Die Erfindung betrifft eine Regeleinrichtung mit einem Ist-Werteingang für den Anschluss eines Sensors, einem einstellbaren Sollwertgeber, einer Anordnung zur Bestimmung der Sollwertabweichung, einem daran angeschlossenen Signalübertrager, sowie einer motorgetriebenen Stelleinrichtung zur Beeinflussung einer Regelgrösse.

Solche Regeleinrichtungen gehören zum Stand der Technik. Je nach Regelaufgabe kann es dabei nötig sein, bei relativ grossen Dreh-, insbesondere Anfahrmomenten an der Stelleinrichtung kleine Stellwege zu erzielen, so dass insbesondere Schrittmotoren zum Antrieb der Stelleinrichtung nicht vorteilhaft sind. Ueberraschenderweise hat sich gezeigt, dass insbesondere für solche Verhältnisse eine Regeleinrichtung geeignet ist, deren Stelleinrichtung einen Niederspannungs-Gleichstrommotor aufweist, dessen Treiberspannung ein aus dem Ausgangssignal des Signalübertragers abgeleitetes Signal ist.

Das Ausgangssignal aus dem Signalübertrager wird dabei vorzugsweise einer Treiberstufe zugeführt, mittels welcher ein Frequenzsignal konstanter Frequenz erzeugbar ist, wobei das Tastverhältnis jedes Impulses in Abhängigkeit vom Ausgangssignal des Signalübertragers gesteuert ist.

Mittels dieses Frequenzsignales, das mit Vorteil eine Frequenz von ca. 8 kHz aufweist, kann der

Sb/rf
18.10.1985                                              EU 1269

Gleichstrommotor so angetrieben werden, dass sehr kleine Stellwege erzielbar sind, ohne dass dabei eine hohe Verlustleistung - die sich in der Erwärmung des Motors zeigen würde - auftritt. Dies insbesondere deshalb, weil die Antriebsleistung bei kleinen Sollwertabweichungen entsprechend reduziert werden kann und der den Motor dabei durchfliessende Strom minimal wird. Diese Eigenschaften erlauben es insbesondere, als Stellglied einen Kugelhahn herkömmlichen Aufbaus zu verwenden, wobei der Gleichstrommotor über ein hochuntersetztes Getriebe mit der als Absperrorgan wirkenden Kugel verbunden ist. Da sich in bestimmten Oeffnungsbereichen eines solchen Ventils der Durchfluss bei kleinen Winkeländerungen der Kugel sehr stark ändert und die Verstellung ein relativ hohes Drehmoment benötigt, ist es erst mit der Einrichtung gemäss der Erfindung bei relativ kleinem Aufwand möglich, Kugelhähne als Stellglieder für die Druck- bzw. Durchflussregelung einzusetzen.

Nachfolgend wird ein bevorzugtes Ausführungsbeispiel der Erfindung anhand der beiliegenden Zeichnung näher erläutert. Dabei zeigt:

Fig. 1 ein Blockdiagramm der Reglerschaltung der Regeleinrichtung;

Fig. 2 ein Zeitdiagramm des Ausgangssignals des Signalübertragers sowie des daraus abgeleiteten Treibersignals;

Fig. 3 eine Seitenansicht, teilweise geschnitten, der als Kugelhahn ausgebildeten Stelleinrichtung;

Fig. 4 eine Aufsicht, teilweise geöffnet, auf die Stelleinrichtung von Fig. 3, und

Fig. 5 die schematische Durchflusscharakteristik des Kugelhahns gemäss Fig. 3.

Bevor auf die Einzelheiten gemäss den Figuren näher eingegangen wird, sei auf die Grundkomponenten der Regeleinrichtung des vorliegenden Beispiels hingewiesen.

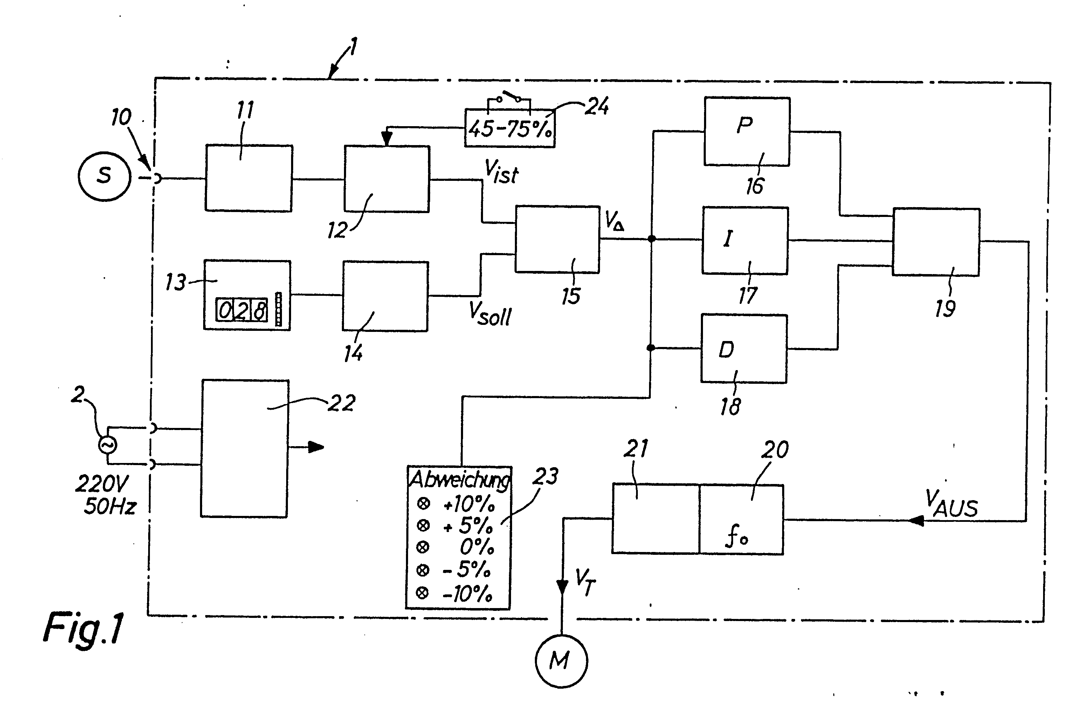

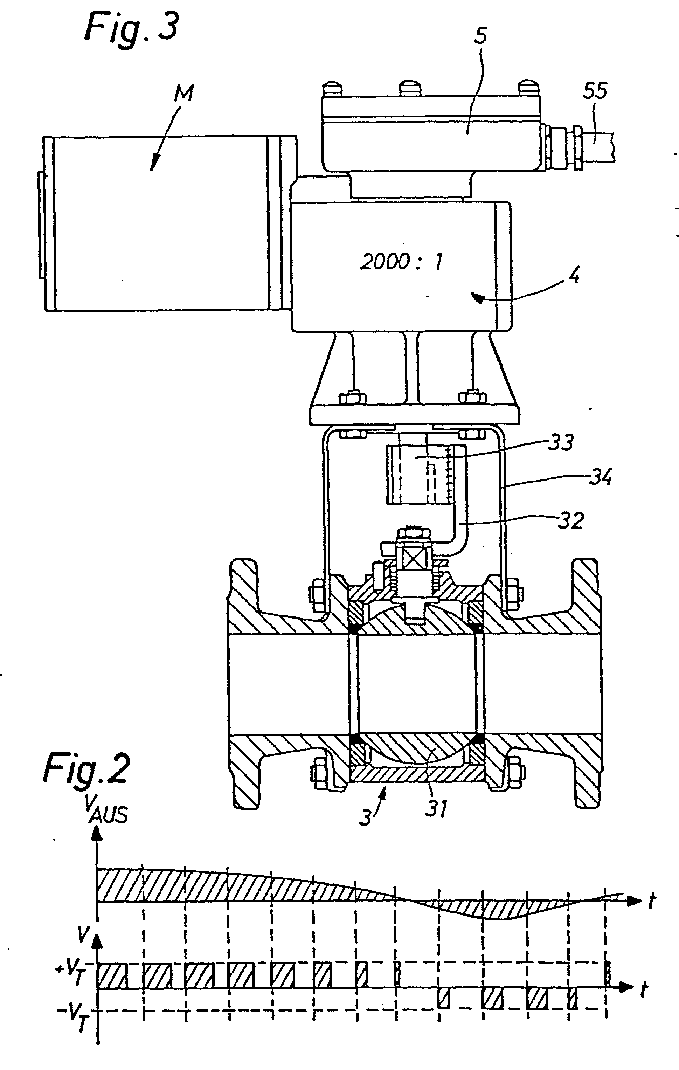

Diese umfassen einen Sensor S (Fig. 1) zur Aufnahme des Istwert-Signals der Regelgrösse. Bei der hier beschriebenen Ausführung einer Durchfluss-, Temperatur- oder Druckregeleinrichtung in einem Leitungssystem kann der Sensor wahlweise ein Durchfluss-, Temperatur- oder Drucksensor bekannter Art sein, der temperatur-, druck- bzw. durchflussabhängige Messsignale im Bereich zwischen 0 und 10 Volt sowie 0 und 20 mA erzeugt. Der Sensor S ist im Betriebszustand an den Sensoreingang 10 einer Regelschaltung 1 angeschlossen, die aus dem Sensorsignal eine geregelte Ausgangsspannung $V_{AUS}$ erzeugt, welche zur Erzeugung eines Treibersignals $V_T$ für einen Stellmotor M dient. Der Stellmotor M beeinflusst beim vorliegenden Ausführungsbeispiel ein im genannten Leitungssystem vorgesehenes Ventil, für welches hier ein Kugelhahn 3 (Fig. 3) verwendet wird. Der Einfluss der Ventilstellung wirkt auf den Sensor zurück, womit der Regelkreis geschlossen ist.

Die Regelschaltung 1 besitzt bereichsweise einen an sich herkömmlichen Aufbau, weshalb sich hierzu detaillierte Ausführungen erübrigen. Die Speisung erfolgt über ein Netzteil 22, das an die Netzspannung 2 anschliessbar ist. Das Sensorsignal gelangt nun zunächst durch eine Eingangssicherung 11 zu einer Eingangsanpassungs- und Verstärkerschaltung 12, worin der Signalpegel angepasst und das Eingangssignal verstärkt wird, woraus sich ein den Ist-Wert darstellendes Signal $V_{IST}$ ergibt. Andererseits ist eine Sollwertvorgabeschaltung 13 vorgesehen, an welcher ein Sollwert digital eingegeben und angezeigt werden kann, und die mit Präzisionsreferenzschaltung 14 verbunden ist, woraus sich das Sollwert-Signal $V_{SOLL}$ ergibt. In einem Subtrahierer 15 wird hernach die Regelabweichung $V_{\Delta}$ bestimmt, welche für die Einstellung des Proportionalitäts-, Integrations- und Differentiationsparameter der Signalübertragung je einem Proportionalitätsglied 16, einem Integrationsglied 17 und einem Differenzierglied 18 zugeführt wird, die separat einstellbar sind. Die einzelnen Signalanteile werden hernach in einem Summierer 19 zusammengeführt, woraus sich das stetige Regelausgangssignal $V_{AUS}$ ergibt (Fig. 2), welches zur Beeinflussung der Stelleinrichtung, im vorliegenden Falle des motorgetriebenen Kugelhahns 3, dient. Die jeweilige prozentuale Regelabweichung $V_A/V_{SOLL}$ wird auf einer LED-Anzeige 23 stufenweise angezeigt, was insbesondere bei der Abgleichung der Regeleinrichtung von Nutzen ist. Hierfür ist eine Schaltung 24 zur Erzeugung eines Testsignals vorgesehen, das nach Wahl 45 bis 75 % des momentanen Ist-wert-Signals als Eingangssignal simuliert und auf Tastendruck auslösbar ist. Gemäss der in Fig. 1 gezeigten Schaltung kann hierzu die Verstärkerschaltung 12 entsprechend beeinflusst werden. Auf Tastendruck ändert sich damit das Istwertsignal abrupt, was es zusammen mit der Anzeige 23 erlaubt, das Zeitverhalten der Regeleinrichtung zu verfolgen und damit den Regler im Betriebszu-stand jederzeit einzustellen.

Das Regelausgangssignal $V_{AUS}$ wird zur Er-zeugung einer Treiberspannung $V_T$ für den Stellmotor M verwendet, wie noch zu beschreiben ist. Als Stellmotor M wird erfindungsgemäss ein Niederspannungs-Gleichstrommotor herkömmlicher Bauart (z.B. 24V, 50 Watt) eingesetzt, der über ein hochuntersetztes Getriebe 4 (ca. 2000:1) mit dem Kugelhahn 3 verbunden ist. Die Treiberspannung $V_T$ wird mittels eines Impulsbreitenmodulators 20 und einem damit verbundenen Leistungsteil 21 erzeugt und ist in Fig. 2 näher dargestellt. Aus dem stetigen Regelausgangssignal $V_{AUS}$ wird im Impulsbreitenmodulator 20 ein Frequenzsignal mit einer Frequenz von vorzugsweise etwa fo = 8000 Hz moduliert, dessen Tastverhältnis etwa proportional zum genannten Ausgangssignal $V_{AUS}$ ist. Der Schaltungsaufbau des Impulsbreitenmodulators 20 ist an sich bekannt (vgl. z.B. Tietze/Schenk, Halbleiterschaltungstechnik, S. 275 ff.) und braucht deshalb hier nicht weiter beschrieben zu werden. Der Leistungsteil 21 hat dabei die Funktion, aus den impulsbreitenmodulierten Frequenzsignalen entsprechende Treibersignale $V_T$ durch Anschaltung und Abschaltung einer Spannungsquelle gemäss den Frequenzsignalen zu erzeugen. Wie sich aus Fig. 2 ergibt, wird die Impulsdauer der Frequenzsignale und damit die Antriebsleistung immer kleiner, je mehr sich die Istwertspannung $V_{IST}$ an den Sollwert-Pegel annähert. Wird dieser Pegel unterschritten, so findet beim Treiber-signal $V_T$ ein Vorzeichenwechsel statt, so dass sich die Drehrichtung des Gleichstrommotors umkehrt. Aus Fig. 2 ist insbesondere ersichtlich, dass im eingeregelten Zustand, wo nur noch kleine ISTwertabweichungen auftreten, wobei sich die Ueber- und Unterschreitungen etwa die Waage halten, nur sehr schmale Treibersignale $V_T$ auf-treten, so dass der Motor während dem grössten Teil der Zeit stromlos bleibt. Damit kann die Verlustleistung und insbesondere die Wärmeentwicklung im Motor herabgesetzt werden. Die impulsartige Ansteuerung des Gleichstrommotors erlaubt ferner eine sehr feinfühlige Regelung, trotz der relativ ungünstigen Kennlinie des verwendeten Ventils 3, mit welchem der Motor M über das hochuntersetzte Getriebe 4 gekoppelt ist.

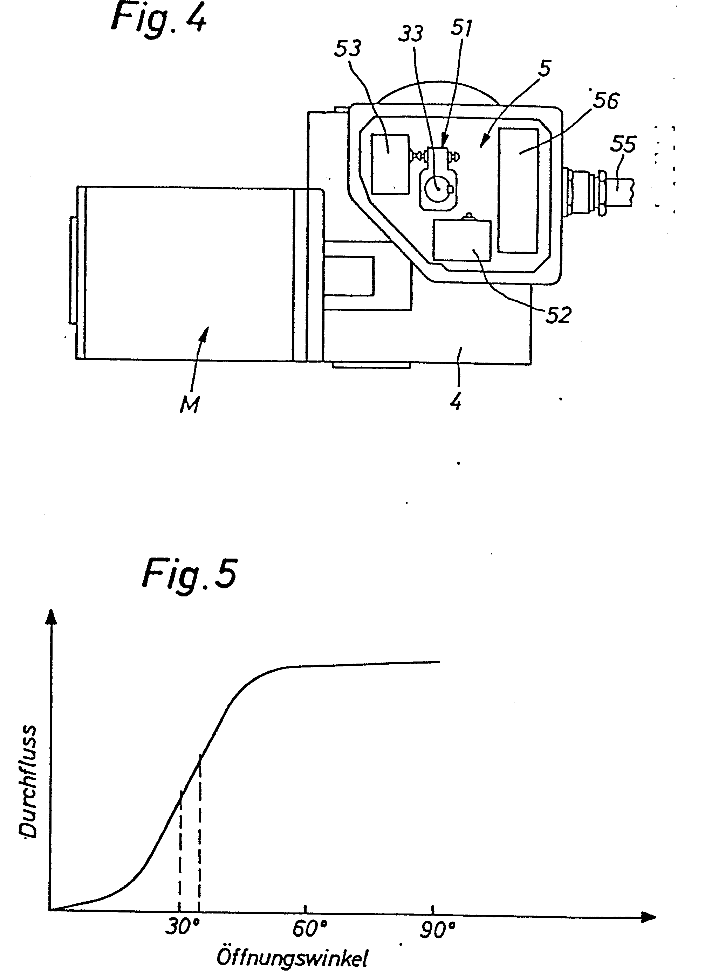

Nachfolgend wird nun anhand der Fig. 3 bis 5 auf diese spezielle Ausgestaltung der Stelleinrichtung in der Form eines Kugelhahns 3 näher eingegangen. Kugelhähne wurden bisher vorwiegend als Abschliessorgane lediglich in ihren beiden Stellungen "auf" und "zu" verwendet oder in einer festen Zwischenstellung, jedoch nicht als Teil einer Stelleinrichtung eines Reglers. Der Grund hierzu liegt einerseits in ihrer relativ ungünstigen Charakteristik (Fig. 5), wo bei mittleren Winkelstellungen eine kleine Winkelverstellung schon zu einer relativ grossen Durchflussänderung führt, und andererseits an den auf die Kugel 31 wirkenden, relativ grossen Momente bei der Verstellung. Diese Umstände liessen bisher eine feinfühlige Regelung bei vertretbarem, apparativem Aufwand unmöglich erscheinen. In Fig. 3 ist die am Kugelhahn 3 wegnehmbar befestigte Stelleinrichtung (3,4,5,M) teilweise im Schnitt gezeigt. Als Kugelhahn 3 kann dabei ein serienmässiges Exemplar verwendet werden, wobei anstelle der Handverstellung ein Mitnehmer 32 vorgesehen ist, in welchem die Abtriebswelle 33 des Getriebes 4 gehalten ist, die koaxial zur Drehachse der Kugel 31 geordnet ist. Das Getriebe 4 und der Motor M sind auf einem Bügel 34 am Hahngehäuse befestigt. Das Getriebe 4 ist im vorliegenden Beispiel zweistufig ausgebildet, wobei das erste Untersetzungsverhältnis 76:1, das zweite 23:1 beträgt, also insgesamt ca. 2000:1. Das Drehmoment, insbesondere das Anfahrmoment des Gleichstrommotors M, reicht damit zur Verstellung der Ventilkugel 31 aus. Zugleich wird durch die hohe Untersetzung eine Sperrwirkung bei Einwirkung von Strömungskräften auf die Ventilkugel 31 erzielt. Um insbesondere eine problemlose Verstellung aus den Endstellungen heraus zu ermöglichen, wozu ein Festsitzen der Kugel 31 in diesen Endstellungen verhindert werden soll, ist eine Endschalteranordnung 5 vorgesehen (vgl. insbesondere Fig. 4). An der Abtriebswelle 33 des Getriebes 4 ist ein Schaltnocken 51 angeordnet, welcher in beiden Endstellungen je einen Endschalter 52,53 betätigt. Der Schaltnocken 51 ist so einstellbar, dass die Endschalter betätigt werden, bevor der mechanische Anschlag der Ventilkugel 3 erreicht ist. Die Endschalteranordnung 5 weist ferner einen Leitungseingang 55 für die Leitung aus dem räumlich getrennt angeordneten Signalübertrager 1, sowie eine Verteilklemme 56 auf.

Die beschriebene Regeleinrichtung erlaubt es, handelsübliche Kugelhähne als Druck- bzw. Durchflussregelorgan in Leitungssystemen einzusetzen. Der gewählte Antrieb mittels eines als "Pseudo-Schrittmotor" betriebenen Niederspannungs-Gleichstrommotors erlaubt eine ausreichend langsame und exakte Verstellung der Ventilkugel auch in den kritischen Mittelstellungen. Neben den
weiteren Vorteilen einer minimalen Bauhöhe und eines
minimalen Gewichts im Vergleich mit bisherigen Regelventilen hat diese Anordnung insbesondere den Vorteil, dass
bei voller Hahnöffnung praktisch kein Druckabfall in der
Leitung auftritt und dass der Kugelhahn gleichzeitig auch
als Absperrventil eingesetzt werden kann, indem es entsprechende Dichtungseigenschaften besitzt, welche bisherige Regelventile nicht aufwiesen.

Patentansprüche
----------------------------

1. Regeleinrichtung mit einem IST-Werteingang für den Anschluss eines Sensors (S), einem einstellbaren Sollwertgeber (13), einer Anordnung zur Bestimmung der Sollwertabweichung (15), einem daran angeschlossenen Signalübertrager (16-19), sowie einer motorgetriebenen Stelleinrichtung (3-5,M) zur Beeinflussung einer Regelgrösse, dadurch gekennzeichnet, dass die Stelleinrichtung einen Niederspannungs-Gleichstrommotor (M) aufweist, dessen Treiberspannung ($V_T$) ein aus dem Ausgangssignal ($V_{AUS}$) des Signalübertragers abgeleitetes Signal ist.

2. Regeleinrichtung nach Anspruch 2, dadurch gekennzeichnet, dass an den Signalübertrager eine Treiberstufe (20,21) angeschlossen ist, mittels welcher als Treibersignal ein Frequenzsignal konstanter Frequenz von vorzugsweise ca. 8 kHz erzeugbar ist.

3. Regeleinrichtung nach Anspruch 2, dadurch gekennzeichnet, dass das Tastverhältnis jedes Impulses des Frequenzsignals in Abhängigkeit vom Ausgangssignal des Signalübertragers (16-19) gesteuert ist.

4. Regeleinrichtung nach einem der vorangehenden Ansprüche, gekennzeichnet durch eine Schaltung (24) zur Erzeugung eines vom momentanen Istwert abweichenden Testsignals zur Simulierung eines vom Sollwert abweichenden Istwertsignals.

5. Regeleinrichtung nach einem der vorangehenden Ansprüche, gekennzeichnet durch eine Anzeige (23) der momentanen Abweichung des Istwertes vom eingestellten Sollwert.

6. Regeleinrichtung nach einem der vorangehenden Ansprüche, dadurch gekennzeichnet, dass im Signalübertrager (16-19) die Proportionalitäts-, Integrations- und Differentiationsparameter unabhängig voneinander einstellbar sind.

7. Durchfluss- bzw. Druckregeleinrichtung nach einem der vorangehenden Ansprüche, wobei die Stelleinrichtung ein Ventil (3) aufweist, dadurch gekennzeichnet, dass der Niederspannungs-Gleichstrommotor (M) über ein hochuntersetztes Getriebe (4) mit dem Absperrorgan (31) des Ventils verbunden ist, wobei die Untersetzung vorzugsweise bei etwa 2000:1 liegt.

8. Durchfluss- bzw. Druckregeleinrichtung nach Anspruch 7, dadurch gekennzeichnet, dass das Ventil (3) ein Kugelhahn ist mit einer drehbar gelagerten Kugel (31) als Absperrorgan, welche drehfest mit der Abtriebswelle (33) des Getriebes (4) verbunden ist.

9. Durchfluss- bzw. Druckregeleinrichtung nach Anspruch 8, dadurch gekennzeichnet, dass das Getriebe (4) einschliesslich des Motors (M) wegnehmbar am Gehäuse des Kugelhahns angeordnet ist.

10. Durchfluss- bzw. Druckregeleinrichtung nach einem der Ansprüche 8 oder 9, dadurch gekennzeichnet, dass die Getriebeabtriebswelle (33) zwischen zwei mittels Endschaltern (52,53) festgelegten Endstellungen um einen Winkel von im wesentlichen $90^{\circ}$ drehbar ist, wobei die Endschalter jeweils vor dem mechanischen Anschlag der Kugel angeordnet sind.

Fig.1

0183075

*Fig. 3*

5

55

M

2000 : 1

4

33

34

32

3    31

*Fig. 2*

$V_{AUS}$

t

V

$+V_T$

$-V_T$

t

# Fig. 4

# Fig. 5

# EUROPÄISCHER RECHERCHENBERICHT

**0183075**
Nummer der Anmeldung

EP 85 11 3815

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | EP-A-0 068 606 (DICKEY-JOHN CORP.) <br> * Seite 7, Zeilen 7-33; Seite 12, Zeile 30 - Seite 13, Zeile 15 * | 1-5 | G 05 D 7/06 <br> F 16 K 31/04 <br> G 05 B 11/28 |
| Y | * Seite 18, Zeile 7 - Seite 19, Zeile 13; Seite 24, Zeile 14 - Seite 26 * | 7 | |
| A | * Zeile 12; Seite 26, Zeile 29 - Seite 27, Zeile 6; Figuren 3, 4A, 4B * | 10 | |
| | --- | | |
| X | US-A-4 236 106 (DAVIS et al.) <br> * Zusammenfassung; Spalte 2, Zeile 51 - Spalte 3, Zeile 4; Figur 1 * | 1-3 | |
| | --- | | RECHERCHIERTE SACHGEBIETE (Int Cl 4) |
| A | DE-C-1 248 781 (BADISCHE ANILIN-& SODA-FABRIK) <br> * Spalte 1, Zeile 43 - Spalte 3, Zeile 19; Figuren 1-3 * | 1,3,7 | G 05 D 7/00 <br> G 05 D 16/00 <br> F 16 K 31/00 <br> G 05 B 11/00 <br> H 02 P 5/00 <br> H 02 P 7/00 |
| A | DE-A-2 508 434 (DITTMAR) <br> * Seite 2; Figuren 1-3 * | 6 | |
| | --- | | |
| A | DE-U-1 903 329 (KRUSE) <br> * Seiten 1-2, Zeile 26; Seite 3, Zeilen 25-39; Figuren 1, 2 * | 8,9 | |
| | ---     -/- | | |

Der vorliegende Recherchenbericht wurde für alle Patentansprüche erstellt

| Recherchenort <br> BERLIN | Abschlußdatum der Recherche <br> 21-02-1986 | Prüfer <br> BEITNER M.J.J.B. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

| | Europäisches Patentamt | **EUROPÄISCHER RECHERCHENBERICHT** | 0183075 |
|---|---|---|---|

Nummer der Anmeldung

EP 85 11 3815

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | DE-U-6 922 573 (WEISHAUPT) <br> * Seite 1, Absatz 1; Seite 2, Absatz 1; Figur 1 * | 8 | |
| Y | DE-U-8 201 902 (FOENGER AG) <br> * Ansprüche 1-3, 6, 9; Seite 4, Zeile 20 - Seite 5, unten; Figuren 1-4 * | 7 | |
| A | DE-A-2 619 477 (EBERSPÄCHER) <br> * Seite 4, Absatz 1; Seite 5, Zeilen 6-33; Seite 11, Zeile 27 - Seite 12; Figuren 1, 2 * | 1-3,7 | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| BERLIN | 21-02-1986 | BEITNER M.J.J.B. |